# EUROPEAN PATENT SPECIFICATION

(11) **EP 2 008 485 B1**
(45) Date of publication and mention of the grant of the patent: **24.06.2015**
(21) Application number: 06724011.9
(22) Date of filing: 04.04.2006
(51) Int. Cl.: H04W 68/12, G06Q 30/02, H04W 48/18, H04W 48/10

(54) **RADIO ACCESS SYSTEM**
FUNKZUGANGSSYSTEM
SYSTÈME D'ACCÈS RADIO

(43) Date of publication of application: 31.12.2008
(73) Proprietor: Telefonaktiebolaget L M Ericsson (publ), 164 83 Stockholm (SE)
(72) Inventor: SACHS, Joachim, 52066 Aachen (DE); SELANDER, Göran, S-117 37 Stockholm (SE); MÉHES, András, S-117 30 Stockholm (SE); RINTA-AHO, Teemu, FI-02360 Espoo (FI); ARKKO, Jari, FI-02700 Kauniainen (FI); LUNDSJÖ, Johan, S-16351 Spanga (SE); MAGNUSSON, Per, S-587 23 Linköping (SE); PRYTZ, Mikael, S-144 63 Rönninge (SE)
(74) Representative: Hoffmann Eitle
(86) International application number: PCT/EP2006/003055
(87) International publication number: WO 2007/112764

(56) References cited:
- US-A1- 2003 095 540
- US-A1- 2005 232 186
- INITIATIVE.CO.UK, [Online] 4 January 2006 (2006-01-04), XP002414467 Retrieved from the Internet: URL:http://www.initiative.co.uk/news/107/o range-sponsors-the-new-christian-oconnell- breakfast-show-on-virgin-radio/> [retrieved on 2007-01-11]

## Description

### FIELD OF INVENTION

The present invention relates to a radio access system, and in particular to a radio access system operated in a communication network and cooperating with at least one further access system to advertise the at least one further radio access system.

### BACKROUND ART

In XP-002414467 there is mentioned a sponsoring deal between a wireless network operator orange and a radio station operator virgin. The topic of the sponsoring deal is on at marketing through virgin radio operator to set forth products offered by the wireless network operator.

In US 2005/0232186 A1 there is described a method and system for extended network access services advertising via a broadband access gateway. The gateway may determine available media-related services, and may transmit information about those services to an access device that may comprise, e.g., a mobile multimedia handset, a personal digital agent, and a personal computer. The access device may notify a user of the availability of the media-related services using visual and/or audible means. The gateway may receive from the access device capability and/or subscriber related information, and the gateway may transmit service information based upon the capability and/or subscriber-related information.

Generally, for attachment to a communication network, a user terminal has to find out what type of services are available from the communication network.

For wireless communication networks it is known that a user terminal observes so-called beacon signals and that the wireless communication network and the user terminal establish a link connection and authorize and authenticate each other before the user terminal obtains an access address, e.g., DHCP or IPv6 auto-configuration, as prerequisite for signalling between the user terminal and the wireless communication network. Only then may the user terminal learn about the capabilities of the wireless communication network it wants to access.

One example of the mechanise described above is outlined in IETF RFC 4066, candidate access router discovery CARD, providing wireless communication network information. Here, the user terminal needs to detect a new access option by itself before it can request further information characterizing an access router and its service delivery capabilities.

However, the attachment procedures for obtaining wireless communication network capability information take a long time and require extensive signalling. This is a particular problem if multiple wireless communication networks operate in parallel and when a user terminal wants to frequently determine which wireless communication network is best suited. In such a case, a service capability interrogation procedure has to be executed multiple times in parallel and also to be constantly repeated to always receive best available wireless communication network services. Even worse, currently there are no mechanisms to promote service delivery from a first communication network to a second communication network, when the first and second communication network are controlled by different operators.

### SUMMARY OF INVENTION

In view of the above, the technical problem of the present invention is to achieve a reliable and effective approach to radio access system attachment in a heterogeneous communication network environment

According to the present invention, this technical problem is solved by a radio access system being operated in a communication network and cooperating with at least one further radio access system having the feature of claim 1 by a radio access node having the features of claim 15, by a control unit having the features of claim 16, by a user terminal having the features of claim 17 and by a method having the features of claim 18.

According to the present invention, cooperation is executed to advertise the at least one further radio access system in the communication network. It is suggested that the radio access system has a receiving unit adapted to receive a secure advertisement from a control unit for the at least one further radio access system. Then, a broadcasting unit is adapted to broadcast advertisement information is relation to the secure advertisement in the communication network.

An important advantage of the present invention is that there is an exchange of advertisement information between the different radio access systems which is secure. Such security may either be achieved through the secure data line connecting the different radio access systems or by applying security protection to advertisement information before exchange between the different radio access systems.

The implication of security for exchange of advertisement information is that it supports the increase in number of different radio access systems which may mutually exchange advertisement information, which will be of particular relevance in a more and more heterogeneous communication environments in the future.

Another important advantage of the present invention is the support of advertisement mechanisms across different radio access systems without the need for a user terminal to actually register with either one of the radio access system(s). To the contrary, according to the present invention, through appropriate setup of the infrastructure in the radio access system, it is possible that a user terminal may at any time receive broadcasted advertisement information. This also allows to safe terminal resources like battery consumption as well as system resources.

A further advantage is that it preserves user privacy by allowing users to remain silent and to not take part in any interaction before the secure advertisement has been received and analysed.

According to a preferred embodiment of the present invention the radio access system executes a relay functionality for establishment of a trust relationship between a terminal receiving the advertisement information and the at least one further radio access system.

An advantage of this preferred embodiment is that it allows "home operators" operating the at least one further radio access system to provide trusted assertions to its subscriber(s) and/or user(s) via roaming partners operating the radio access system. Here, it is an option that the relaying radio access system does have no access to any information it forwards which is of great benefit for the home operator when forwarding sensitive information to its subscriber(s) and/or user(s).

According to a further preferred embodiment of the present information there is established a trust relationship between the terminal receiving advertisement information and the radio access system, wherein the trust relationship is established on the basis of the secure advertisement received from the further radio access system.

An advantage of this preferred embodiment is that it maximises the achievable security level, e.g., through authentication of the relaying system, integrity protection of advertisement information or other information relating to an interaction between user terminal an the radio access system, encryption of advertisement information or other information relating to an interaction between user terminal an the radio access system, as well as privacy of broadcast receiver.

According to a preferred embodiment of the present invention the radio access system comprises an advertisement information generating unit adapted to generate advertisement information in multiple ways.

In other words, advertisement information is generated in relation to the received secure advertisement using any functional relation which is appropriate in a particular scenario considered.

Typical examples are appending information which is comprised in the secure advertisement to additional local advertisement information which is forwarded by the receiving radio access system anyway to propagate its own communication services to the user terminal.

Secondly, the receiving radio access system may simply forward information which allows a user terminal to directly connect to the advertising further radio access system, either by broadcasting dedicated characteristics of the further access system or by simply indicating availability of the further access system.

A third alternative for generation of advertising information is to receive the secure advertisement information for subsequent processing at the receiver radio access system. E.g., one option is to split the secure advertisement information into smaller parts according to different categories, which category may be set up according to time relevance, priority, and amount of information, respectively.

A fourth alternative would be to generate advertisement information in a hierarchical group of advertisement information comprising advertisement information of different categories, wherein hierarchy implies that different groups are handled in different ways, e.g., sent with different repetition frequencies.

An advantage of processing the secure advertisement in an appropriate way is increased flexibility for advertisement of the further radio access system within the receiving radio access system for increase of radio resource utilization efficiency. Should relevant parts of the received secure information, after appropriate processing, be broadcast either sequentially according to a predetermined schedule, or upon receipt of a request from the user terminal, then this allows to tailor the forwarding of advertisement information to service requirements prevailing at the user terminal.

According to a further preferred embodiment of the present invention, it is also possible to apply security protection to advertisement information, generated either way as outlined above, before broadcasting thereof to the user terminal.

Here, one option is to security protect only part of the received secure advertisement which may then be forwarded at different repetition frequencies. Typically, this would apply for different categories where a first type of category does not change so much over time, while a further type of category might change rapidly and therefore need immediate broadcasting in a repeated manner.

A further preferred embodiment of the present invention tailors the broadcasting area for minimization of use of radio resources.

Here, one option is to broadcast secure advertisement information only in an area wherein the receiving radio access system and the advertising further radio access system are operated in parallel.

In addition, the advertisement information may be certified for a specific geographic area so that advertisement information received outside such a geographic area would not be valid.

An important advantage of this is that rogue communication networks cannot replay advertisement outside the indicated geographic area. Further, within the geographic area it is likely that the advertisement originating radio access system hears the replayed advertisement and that the rogue radio access system may be detected.

According to another preferred embodiment of the present invention, user terminals may register in the advertisement receiving radio access system with respect to those further radio access systems they are interested in. Then, upon receipt of secure advertisement, the further radio access system will be put into relation with those terminals which are interested in receiving the related secure advertisement for selective forwarding of advertisement information derived from the received secure advertisement information only to pre-registered user terminals. This is yet another option to increase radio resource utilization efficiency during service advertisement or across different radio access systems.

According to a further preferred embodiment of the present invention, it is suggested that the radio access system receiving the secure advertisement and the further radio access system forwarding the secure advertisement negotiate terms of advertisement before initiating the advertisement in the sense outlined above.

The particular advantage of such an approach may best be understood considering that in the future the number of different communication networks in related radio access systems will significantly increase. Therefore, the option to negotiate terms or conditions for information exchange and cooperation will be a prerequisite to guarantee inter-operability and necessary integrity standards across a plurality of different communication networks.

According to a further preferred embodiment of the present invention, it is suggested to not only negotiate terms of cooperation, but also to either authorize the receiving radio access system or the further radio access system before exchange of secure advertising information, also after negotiation of terms of cooperation. A particular benefit of this is that the degree of security and integrity may be even further optimized, which is again crucial for the increased number of different communication networks in heterogeneous communication environments to be seen in the future.

According to another preferred embodiment of the present invention there is provided a computer program product directly loadable into the internal memory of a radio access system comprising software code portions for performing the inventive radio access system attachment process when the product is run on a processor of the radio access system.

Therefore, the present invention is also provided to achieve an implementation of the inventive method steps on computer or processor systems. In conclusion, such implementation leads to the provision of computer program products for use with a computer system or more specifically a processor comprised in e.g., a radio access system like a base station or a base station controller.

A program defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and hard drives; or information convey to a computer/processor through communication media such as network and/or Internet and/or telephone networks via modems or other interface devices. It should be understood that such media, when carrying processor readable instructions implementing the inventive concept represent alternate embodiments of the present invention.

Overall, the present invention solves the problems described above with respect to the prior art and will be a pre-requisite for promoting services across different communication networks in a heterogeneous communication environment. It significantly improves efficiency of access and network selection for user terminals having multi-radio access technology capabilities. Further, the present invention supports excellent backward compatibilities, wherein existing advertisement mechanisms may be continuously used and new categories of advertisement may be established in addition thereto. Therefore, the present invention also enables required integration between different communication networks.

### DESCRIPTION OF DRAWING

In the following, the best mode as well as preferred embodiments of the present invention will be described with reference to the drawing, in which:
- Fig. 1: illustrates the inventive concept for secure advertisement across radio access system boundaries according to the present invention;
- Fig. 2: shows a schematic diagram of a radio access system according to the present invention;
- Fig. 3: shows a flowchart of operation for the radio access system shown in Fig. 2;
- Fig. 4: shows a further detailed schematic diagram of a radio access according to the present invention;
- Fig. 5: shows a flowchart of operation for the radio access system shown in Fig. 4;
- Fig. 6: shows a further detailed schematic diagram of the broadcasting unit shown in Fig. 4;
- Fig. 7: shows an example of a data structure to handle communication overlap area across radio access system boundaries;
- Fig. 8: shows an example of a data structure to handle user terminal pre-registration for selective secure advertisement within the radio access system receiving secure advertisement information;
- Fig. 9: shows an approach to security protection during broadcasting of advertisement information according to the present invention; and
- Fig. 10: shows an example of a replay attack initiated by a rogue radio access system on the secure advertisement scheme according to the present invention.

### DESCRIPTION OF BEST MODE AND PREFERREED EMBODIMENTS

In the following, the best mode of carrying out the invention as well as preferred embodiments thereof will be described with reference to the drawing. Here,: insofar as different functionalities of the present invention are described, it should be clear that such functionality may be achieved either in hardware, in software, or a combination thereof.

Further, insofar as reference is made to different radio access systems, it should be understood that there is no particular restriction to any type of radio access system which may be according to any standard and according to 2G, 3G, and/or 4G, and subsequent generations of wireless communication. Still further, radio access systems are not restricted to a particular technology such as cellular wireless communication, hotspot WLAN or access systems, etc., but may be of any type which supports exchange of information in a wireless manner.

Further, it should be noted that the forwarding of advertisement information to a radio access system by broadcasting may be achieved through any appropriate mechanism as long as no dedicated attachment of the user terminal to the radio access system is executed. One typical example of such broadcasting mechanism would be the use of so-called beacon signals used in currently available wireless communication networks for broadcast of advertisement information without attachment of the user terminal. Beacon signals are used to indicate to a user terminal which service area they belong to and to estimate the radio link quality. Therefore, beacon signals need to be broadcast frequently, so that a moving user terminal can consider handover, if necessary.

Usually, beacon signals are sent with lowest modulation and coding scheme so that they can be received also at an edge of a service area. This means that a beacon signal transmission requires the largest possible number of resources, i.e. transmission time and transmission power, per byte. Therefore, as beacon signals are dimensioned to be understood also at a cell edge, they are allowed to use more radio resources than any other type of dedicated signalling message.

Further, beacons that may be used to promote and broadcast advertisement information generally comprise information like, e.g., network ID, cell ID, optionally supported data arrays, support for cryptographic algorithms, key sizes, etc. According to the present invention, beacons will be used to broadcast enhanced information, e.g.:
- network capabilities: what services are supported, IMS, MMS, SMS, IPv4 connectivity service, IPv6 connectivity service ...;
- cooperation information: roaming partners, terms of cooperation ...;
- composition information: AAA procedures, tariffs of usage, different tariff options, ways of payment, type of security procedures and keys ...;
- network information, e.g., for access selection: network load, cell load, remaining cell resources, number of connected devices, etc., and same kind of information on the backhaul link like capacity, load, remaining backhaul resources, etc.

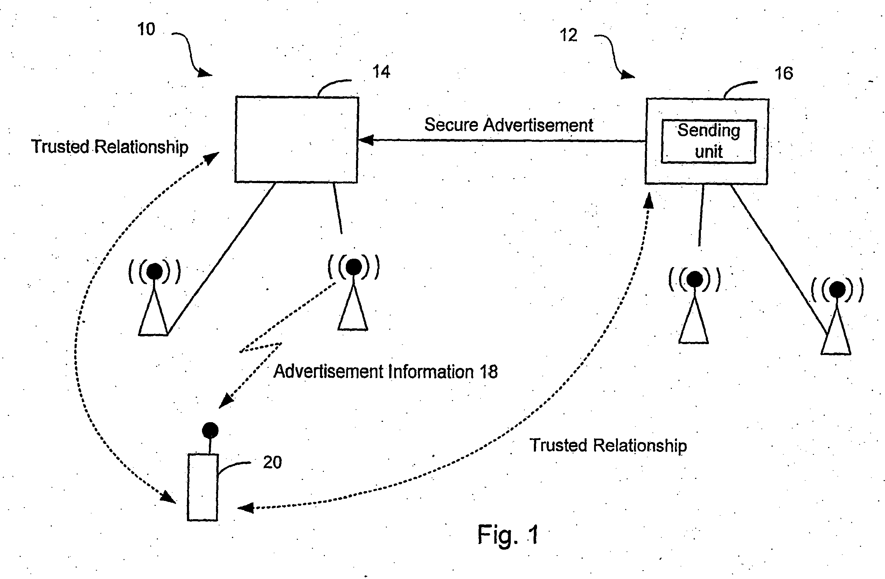

Fig. 1 illustrates the inventive concepts for secure advertisement across radio access system boundaries according to the present invention.

As shown in Fig. 1, without loss of generality, one may assume that a first radio access system 10 is operated in a communication network. The communication networks cooperates with at least one further radio access system 12 for advertisement of the at least one further radio access system in the communication network.

As shown in Fig. 1, the radio access system 10, e.g., a control unit 14 thereof, receives a secure advertisement from, e.g., a control unit 16 for the further radio access system 12. In more detail, the control unit 16 may comprise a sending unit adapted to send the secure advertisement to the radio access system.

As shown in Fig. 1, the radio access systems 10 may set up an advertisement information 18 in relation to the received secure advertisement for broadcasting thereof to user terminal(s) 20.

As shown in Fig. 1, in the most general sense the radio access system 10 executes a relay functionality for establishment of a trust relationship between a terminal 20 receiving the advertisement information and the at least one further radio access system 12.

Also, according to the present invention, the user terminal 20 need not be attached to either the radio access system 10 or the further radio access system 12 for receipt of advertisement information.

Also, while exchange of secure advertisement is shown in Fig. 1 with respect to control unit 14, 16 of the radio access system and the further access system, this is to be understood only as an example. Generally, either one of the control units 14, 16 may form part of any networking node in a radio access network, e.g., base stations, base station controllers, access routers, access router controllers, whatever type of radio access systems are in cooperation with each other. Alternatively, the control units 14, 16 may be integrated into a core network of a wireless communication network.

For the application of the present invention as outlined in Fig. 1, it may be assumed that there will be a large number of individual radio access networks. Therefore, possibly user terminals could connect to a large variety of different communication networks and related radio access systems. In the future, this will not only be the case for predetermined cooperation agreements, e.g., as with 2G/3G operators today. Instead, any radio access system may cooperate with any other radio access system, which may imply application of cooperation rules being negotiated dynamically including security, charging and usage policies as outlined in more detail below.

Therefore, the application scenario shown in Fig. 1 applies to communication networks from which a user terminal may receive advertisement information, e.g., using beacons, e.g., wide area cellular networks, local access networks, relay networks, wireless LAN networks, moving networks, personal area networks, etc., establishing business and network relationships on the fly.

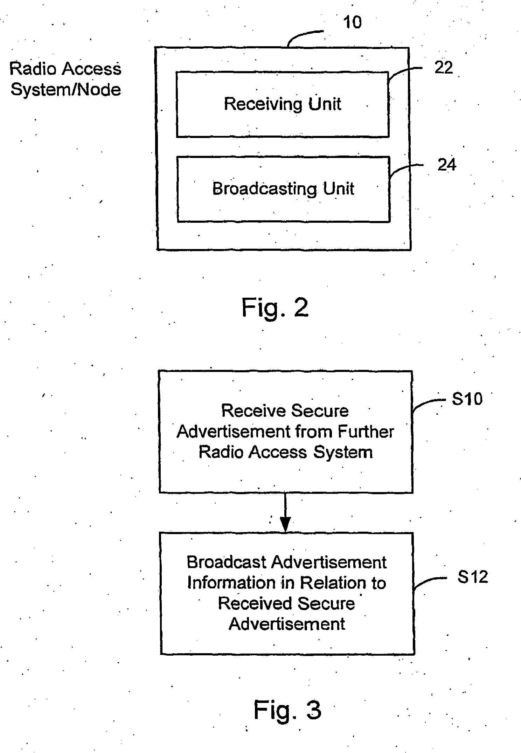

Fig. 2 shows a schematic diagram of the radio access system 10 shown in Fig. 1.

As shown in Fig. 2, the radio access system 10 comprises a receiving unit 22 adapted to receive the secure advertisement information and a broadcasting unit 24 adapted to broadcast advertisement information in relation to the secure advertisement in the communication network of the radio access system 10.

Fig. 3 shows a flowchart of operation of the radio access system 10 shown in Fig. 2.

As shown in Fig. 3, operatively the receiving unit 22 executes a step S10 to receive secure advertisement from the further access system to be attached to itself. Step S10 may be execute to indicate available services and related operative condition of the further radio access system, e.g., network load, cell load, available cell resources, number of connected user terminals, etc..

As shown in Fig. 3, operatively the broadcasting unit 24 executes a step S12 to broadcast advertisement information in relation to the received secure advertisement.

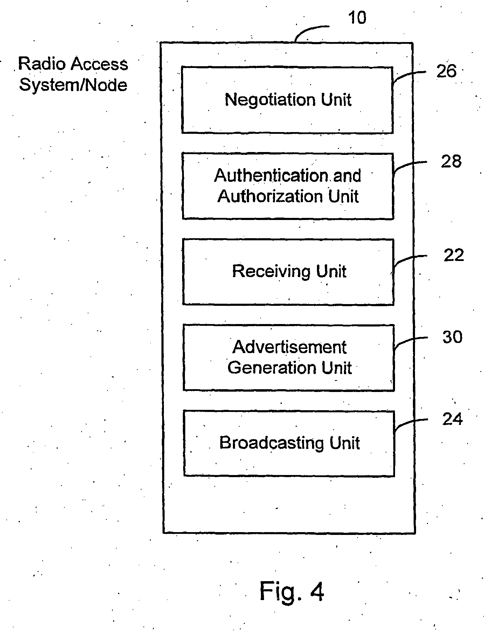

Fig. 4 shows a further detailed schematic diagram of the radio access system 10 shown in Fig. 2.

As shown in Fig. 4, further to the receiving unit 22 and the broadcasting unit 24, the radio access system 10 may optionally comprise a negotiation unit 26 and an authorization unit 28, and an advertisement generation unit 30.

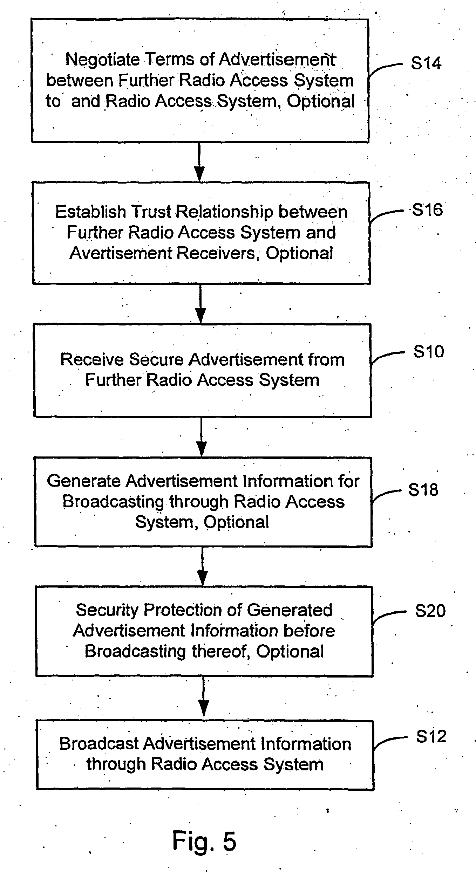

Fig. 5 shows a flowchart of operation for the radio access system 10 shown in Fig. 4.

As shown in Fig. 5, operatively the negotiation unit 26 will execute a step S14 to negotiate terms of advertisement between the radio access system to be attached and the attaching radio access system, which step S14 is optional.

Further, the negotiation step S14 will be executed to coordinate questions of radio access system interoperation in view of related capabilities and available services, authentication procedures, tariffs of usage, different tariff options, ways of payment, types of security procedures and keys.

Further, it should be noted that the negotiation unit 26 may execute step S14, e.g., prior to actual advertisement of the further radio system or continuously in a repeated manner during ongoing advertisement of a further radio access system via the radio access system.

Further, it should be noted that the negotiation step S14 executed by the negotiation unit 26 may be executed under security protection. This may either be achieved by using a secure connection line, e.g., a PSTN line connecting to wireless communication networks, a dedicated communication line connecting a WLAN to a wireless communication network of 2G/3G/4G or whatever other type of secure connection line which is appropriate for secure exchange of information.

Further, as alternative to use of a secure connection line, one could consider applying security mechanisms on information exchange during negotiation between different radio access systems, i.e. use of security keys, encryption and for authentication, etc.

As shown in Fig. 5, operatively the authentication and authorization unit 28 executes a step S16 for establishing trust between the further radio access system and the radio access system, or in other words to authenticate the different radio access systems with each other to proof claimed identity. Another functionally of the authentication and authorization unit 28 is to execute service delivery authorization.

It should be noted that the execution of the step S16 is optional, depending on what type of security level is desired for advertisement of further radio access systems in the radio access system under consideration. One option would be to solely authenticate the further radio access system prior to broadcasting of related advertised information. Also, the radio access system itself may be authenticated at the further radio access system prior to exchange of secure advertisement.

As shown in Fig. 5, optionally the authentication and authorization unit 28 may establish a.trust relationship between the terminal 20 receiving the advertisement information and the radio access system 12. Here, the trust relationship is established on the basis of the secure advertisement received from the further radio access system 12.

As shown in Fig. 5, after execution of step S10 by the receiving unit 22 as explained above with respect to Fig. 3, operatively an advertisement generation unit 30 may execute step S18 to generate advertisement information for broadcasting through the attaching radio access system 10, which step is optional depending on how the received secure advertisement is actually used at the radio access system 10.

A first example of generation of advertisement information is to execute step S18 for appending the secure advertisement to local advertisement information of the radio access system 10.

While this approach allows for a direct forwarding of all received relevant information, there may occur a situation where the resulting advertisement information to be broadcast may contain too much information and therefore consume too many radio resources. In other words, adding to much information to local advertisement information in corresponding beacon drastically increases signalling load and use of radio resources.

A second example of execution of the step S18 by the advertisement generation unit 30 would be to generate information in line with direct receipt of further advertisement information from the further radio access system 12. Here, instead of including full secure advertisement for the further radio access system, the further radio access system sends an indication for reception of its own advertisement. One typical example could be that the further radio access system 12 indicates that it will send out its own advertisement and related beacon, e.g., at time xx, at location yy, on frequency zz, with transmission mode AA in cell BSS/cell ID. Then, the user terminal 20 may listen to advertisement information directly from the further radio access system 10.

It should be noted that this can be achieved very effectively, as the user terminal 20 is not required to scan for advertisement information of the further radio access system 12, as while the pre-received broadcast information already knows when, where, and how to listen for the intended advertisement information and related beacons.

A third example of execution of the step S18 by the advertisement generation unit 30 would be that the advertisement generation unit 30 generates information reflecting only availability of the further radio access system 12. In such a case, the secure advertisement would contain only basic advertisement information for the further radio access system. From related generated advertisement information, the user terminal 20 would know that the further radio access system 12 is available to then decide on its own if there is desired more information. Such additional advertisement information, e.g., the full.advertisement, can then be requested by the user terminal 20.

Heretofore, two options exist. Either, a request for advertisement information is forwarded to the radio access system 10 using an established connection with the radio access system 10, which request is then sent via the radio access system 10 to the radio access system 12, for related provision of a reply from the further radio access system 12 again via the radio access system 10 to the user terminal 20. A second option would be that the user terminal 20 submits a request for full advertisement regarding the further radio access system 12 via the radio access system 10 to the further radio access system 12. Then, the further radio access system 12 could directly reply with advertisement information at least informing the user terminal 20 when it may receive the advertisement information from the further radio access system in a direct manner, e.g., either broadcast or on a dedicated link.

Further, it should be noted that the advertisement generation unit 30 is adapted to execute step S18 to generate advertisement information dividing into a plurality of advertisement sub-elements. As further option, the advertisement generation unit 30 may execute step S18 to as to categorize different elements of the advertisement information, preferably according to time relevance, priority, and/or amount of information.

Regarding the use of different categories according to time relevance, priority and/or amount of information, related categories could be as follows:
- category (1/A) containing, e.g., cell ID and network ID;
- category (2/A) containing, e.g., supported arrays and security support;
- category (3/B) containing, e.g., costs/prizing of access and other QoS parameters like delay and jitter, cell load; and/or
- category (4/B) containing, e.g., list of partners of the radio access network, type of connectivity services (IPv4, IPv6), type of mobile services being supported, e.g., access to IMS, location based services, SMS/MMS, etc

According to a simplified solution, there could only be two categories. One would be category (A) containing time-crucial and/or short information elements, e.g., category (1) according to the above list. The other category (B) would contain non-time crucial and/or long information elements, e.g., category (3, 4) according to the above list.

In view of the above, regarding the execution of the step S12 to broadcast advertised information is executed by the broadcasting unit 24, for each category different beacons would be used and different beacon repetition frequencies would be assigned. A typical example would be that a first type of beacon signals is transmitted every couple of 100 milliseconds, e.g., every 100 ms, while a second type of beacon signal, category (B) is transmitted every couple of minutes, e.g., every 5 minutes.

Besides the broadcasting of different- beacon signals according to different transmission intervals specifying a ratio therebetween, beacon signals of different types can be combined at a moment when both beacon signals are due to be broadcast. In other words, in such a situation a combined beacon signal for different types of categories would be sent containing information elements of all different categories.

Further, beacon signals of a type being repeated more frequently could indicate when beacon signals of the type being broadcast less frequently will be sent next, e.g., the next beacon signal of the second type will be sent in a pre-specified number of intervals for the beacon signal of the first type. This option is useful when beacon signals carry a specification of related type of category.

In view of the above, the user terminal may observe the beacon signals and related advertisement information of different categories and then know when which advertisement information will be provided. Then, the user terminal 20 will determine, based on its own service requirements, e.g., when a new session is started or when the connectivity of an existing connection decreases to:
- Wait until the beacon signal and related advertisement information being broadcast less frequently is broadcast next for observation thereof. This may be called a passive mode of operation for the user terminal, which only requires listening and therefore is rather battery resource efficient. Here, the user terminal 20 does not need to reveal itself to the radio access system.
- Request the advertisement information directly from the radio access system 10. This may be referred to as active mode of operation of the user terminal, which requires that the user terminal first attaches, e.g., to the radio access system, so that it can send a request message for advertisement information having a lower broadcast repetition rate. Then, the related advertisement information may be transmitted directly to the user terminal 20, e.g., on a dedicated link, or it can be broadcast, e.g., if multiple requests for advertisement information having a lower repetition rate have been received simultaneously at the radio, access system 10.

Besides the passive versus active advertisement information retrieval outlined above, according to the present invention, there exist at least two options for broadcasting advertisement information of a type having lower repetition frequency as follows:
- A first option would be to broadcast "long advertisement information" with a low repetition rate. Then, the user terminal 20 has to wait until the correct long advertisement information is received.
- A second option would be to split the "long advertisement information" into many smaller advertisement information sub-elements, which are distributed using many smaller beacon signals. The user terminal then needs to listen to the related beacon signals for a certain period of time for gathering the contents of the "long advertisement information". In principal, the longer the user terminal listens, the more advertisement information it collects. It would then be up to the user terminal 20 to decide when enough advertisement information has been obtained, to either decide on stopping listening to beacon signals of the corresponding radio access system or to connect to this radio access system.

In view of the above, besides the mechanism to categorize different types of advertisement information, the splitting of advertisement information to sub-elements provides an efficient way of including long advertisement information in beacon signals.

As shown in Fig. 5, operatively the advertisement generation unit 30 may also execute a step S20 to security protect generated advertisement information before broadcasting thereof.

In more detail, for advertisement information following to different categories or being divided into different sub-elements, a way to limit security complexity would be to encrypt or sign only part of the advertisement information, even some part of a single sub-element. Here, unprotected advertisement information is less expensive, e.g., "stop and listen", and security protected advertisement information increases trustworthiness.

Also, the step S20 may be executed to achieve security protection with respect to a predetermined geographic area. This would allow that rogue radio access system may not replay advertisement information outside the geographic area. Further, within the geographic area there is a high likelihood that the originator of the advertisement information may hear the replayed advertisement information and that the rogue radio access system may be detected. Generally, a geographic area may be described according to any suitable form, e.g., by coordinate regions, by radio cell ID values, or by network ID values.

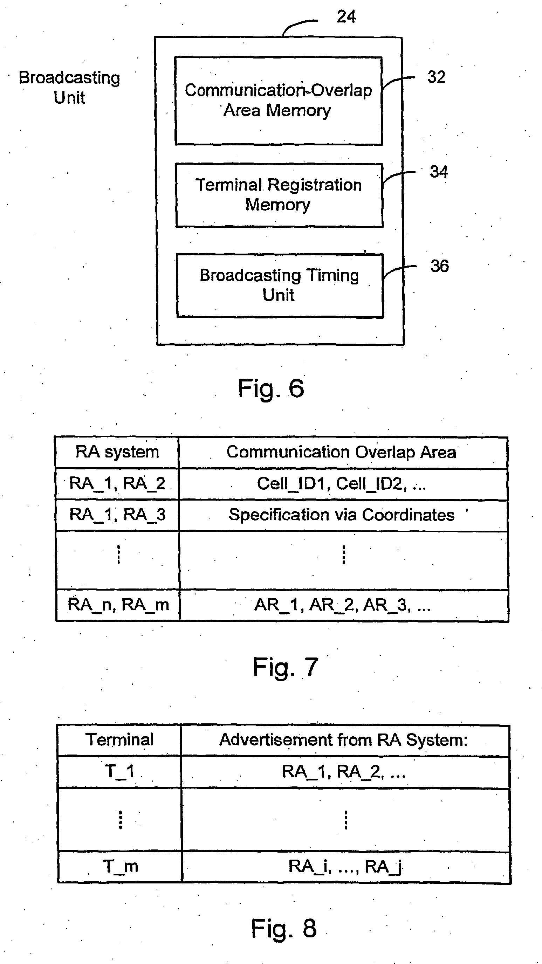

Fig. 6 shows a further detailed schematic diagram of.the broadcasting unit 24 shown in Fig. 2 and 4, respectively.

As shown in Fig. 6, the broadcasting unit 24 may comprise an overlapping communication area memory 32, a terminal registration memory 34, and a broadcasting timing unit 36.

Operatively, the overlapping communication area memory 32 may store a communication overlap area for the radio access system and the further radio access system executing advertisement. Assuming that a communication overlap area is stored in the communication overlap area memory 32 and that the radio access system 10 and the further radio access system 12 are operated in parallel, then the broadcasting unit may broadcast the advertisement information only in the corresponding communication overlap area.

Fig. 7 shows an example of a data structure to handle communication overlap areas for different radio access systems.

As shown in Fig. 7, one option is to consider pairs of radio access systems and to characterize the communication overlap area according to any appropriate type, e.g., cell ID values, specification via coordinates like lower latitude and attitude and upper latitude and attitude, or via indication of access routers, whichever is appropriate.

Further, the terminal registration memory 34 shown in Fig. 6 may store at least one terminal identification in relation to the at least one further radio access system.

Fig. 8 shows an example of a data structure for handling user terminal pre-registration for selected secure advertisement within the radio access system handling secure advertisement from a further radio access system.

As shown in Fig. 8, the pre-registration of user terminals with respect to sub-sets of further radio access systems advertising their services allows to selectively forward such received secure advertisement in the receiving radio access system so as to increase radio resource utilization efficiency.

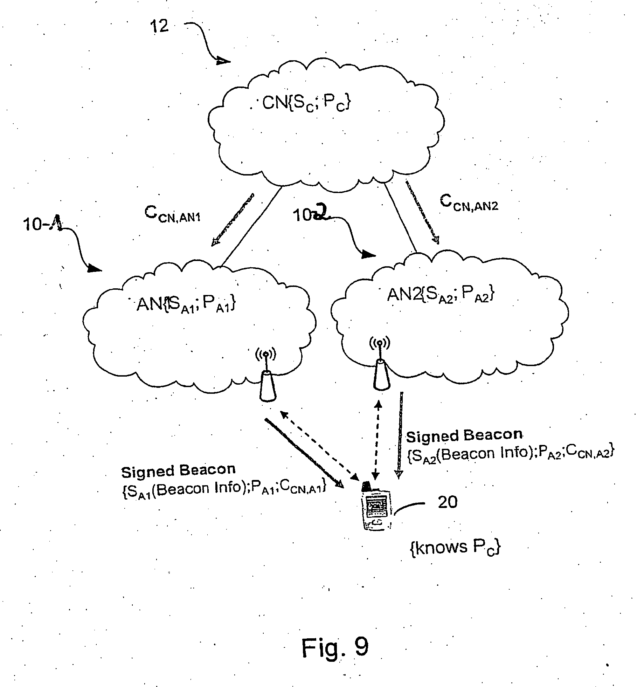

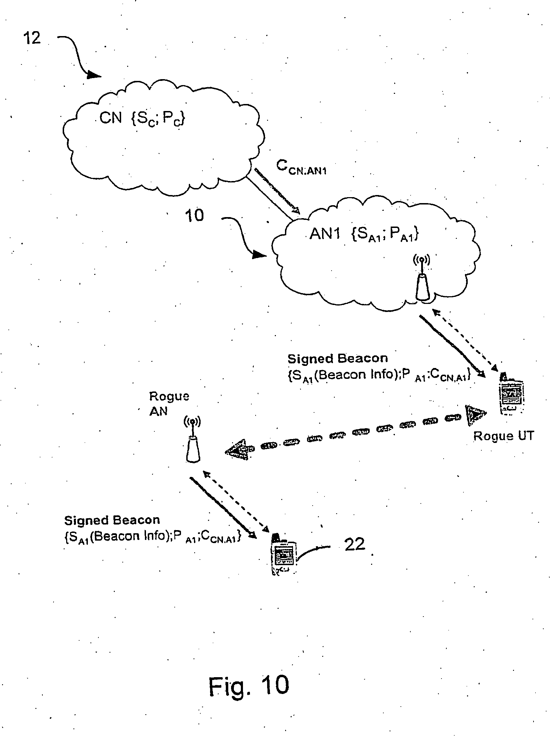

In the following, further details of security protection with respect to advertised information according to the present invention will be explained with respect to Figs. 9 and 10.

In more detail, Fig. 9 shows an approach to security protection during broadcasting of advertisement information.

Generally, with the new scenario described so far, every radio access system can connect to any other radio access system with dynamic negotiation of cooperation terms. Therefore, a much larger number of communication networks/radio communication systems are involved such that they do not only cooperate, but also compete with each other.

Considering that advertisements constitute a local access market, they can influence how user terminals do or try to connect to radio access systems, and related communication networks. In this scenario, it is feasible that some rogue communication networks manipulate or attack the internetworking process, by spreading wrong information in their advertisements and related beacon signals, by manipulating other beacon signals or allegedly sending information on behalf of other providers.

However, so far advertisement information and related beacon signals have been assumed to be trusted and different communication network operators are a-prior trusted. Also, due to licence frequency usage, other non-licensed players are not allowed to transmit in licence frequency bands. In WLAN networks, it is assumed a priori that advertisement information in beacon signals is correct. Therefore, only after network attachment an authentication/authorization process may be performed.

However, with increased cooperation and competition between different communication networks, e.g., the cooperation of hotspot providers with cellular communication network operators, it will become necessary to include more advertisement information, in particular more sensitive advertisement information into beacon signals.

Therefore, extended beacon signals as described above contain information which allows a user terminal to decide whether network attachment to an access network AN is useful, e.g., whether the link quality is good enough and the services provided by the access network AN fulfil the requirements expected at the user terminal.

Further, advertisement information and related beacon signals may contain rather sensitive information like pricing informations, network load information, informations about business relationship of an access network AN with other communication networks.

In view of this scenario, Fig. 9 shows an approach to security protection during broadcasting of advertisement information according to the present invention.

As shown in Fig. 9, there are used different private and public keys for encryption of different types of advertisement information and generation of certificates. In particular, a core network CN is provided for interoperation between a first access network AN1 and a second access network AN2. The different private keys and public keys as well as certificates shown in Fig. 9 may be best explained as follows:
Sx-private (secret) key of x;
Px-public key.of x;
S(.), P(.)-(.) cryptographic operation with S, P; and C_{x,y}=S_{y}({Pₓ; val; ...})-certificate from y for x.

As shown in Fig. 9, in order to avoid denial of service attacks of rogue access networks pretending to be other access networks and in order to avoid to add user terminals being attached to them, it is advisable to have beacon signals corresponding to related advertisement information signed and/or integrity protected. Preferably, beacon signals are only partly security protected to facilitate receipt thereof.

As shown in Fig. 9, a user terminal UT establishes a relationship with a core network CN and knows a cryptographic public key or may share a symmetric cryptographic key. Since business relationships/roaming agreements between the core network CN and access networks AN1, AN2 can be short lived, the core network regularly assigns certificates or assertions to the access networks AN1, AN2, including a validity of the assertion.

The access networks AN1, AN2 and related radio access systems sign or calculate a message authentication over the beacon information and optionally include the assertion. Therefore, the user terminal can obtain the relevant cryptographic keys and validate that the beacon information is correct, e.g., from the network to which it is attached. Here, compact signature schemes, e.g., DSA, enable efficient procedures for use of public key cryptography.

As shown in Fig. 9, one may assume that the user terminal frequently has a trust relationship with the core network CN, e.g., via another access network AN to which it is attached, or has stored a copy of the CN certificate. Then, the user terminal can validate the signature from the core network or another entrusted third party via the other connection or can compared it with the stored copy. As handled for the validation, the public key of the access network AN1, AN2 signing the beacon can be used. Further, the identifiers of communication networks can also be based on cryptographically generated addresses CGA, e.g., a host identity tag. This is beneficial if the certificate of a communication network needs to be validated from a trusted third party. Also, the cryptographically generated address can then be used as handling the validation.

While above, general aspects with respect to security protection have been explained, in the following a more detailed description of use of security protection will be given.

As already outlined above, security properties with respect to advertisement information include:
- Authentication of relaying and/or advertisement party;
- Integrity protection of advertisement information and/or other information relating to an advertisement interaction; and/or
- Encryption of advertisement information and/or other information relating to the advertisement interaction; and/or
- Privacy of broadcast receiver.

As shown in Fig. 9, authentication, integrity protection and encryption rely on a previous trust relation between parties, wherein this trust relation is often enforced by a prior agreement of cryptographic keys. Here, an important aspect of privacy is the right of the receiver to what extend it needs to interact with a sender.

Generally, while according to the present invention there exists no particular restriction with respect to the cryptographic technique being applied, typical examples using different algorithms and key lengths are, e.g., symmetric block ciphers such as AES, 3-DES etc., further symmetric stream ciphers such as RC4, Blowfish etc., and still further asymmetric ciphers such as RSA, Elliptic curves etc. Examples of digital signature algorithms include HMACs for the symmetric and asymmetric schemes mentioned above.

Further, for symmetric schemes a trust relation between two parties is expressed as sharing of a symmetric key.

Still further, for asymmetric schemes there are two different roles for encryption/decryption and signing/verifying which require different keys. Encryption or verification is performed by a so-called public key, which may be known to anyone. Decryption or signatures is/are performed by a so-called private key which corresponds to the public key, however, is secret and should only be known to a dedicated receiver or legitimate signed.

Fig. 9 illustrates the general principles explained above for the advertisement framework according to the present' invention.

In more detail, for the scenario shown in Fig. 9 one may, without loss of generality, assume that there exist trust relation ships between a home operator core network CN 12 and the user terminal 20. Here, the home operator core network substitutes for the further radio access system referred to above. In other words, the advertisement mechanisms explained so far are not only applicable to the interaction between different radio access systems, but also to and interaction between a radio access system and a core network of a wireless communication network.

As shown in Fig. 9, the user terminal 20 receives the public key P_C from the core network. The establishment of this trust relationship may be part of a subscription or part of any other business arrangement with the home operator.

As shown in Fig. 9, the home operator 10 also has trust relations with visited radio access systems 10-1, 10-2. the home operator can now sign, by using its private key S_C, advertisement information corresponding to offered services, prices, etc. together with information of trusted radio access systems 10-1, 10-2, time of day, location, etc. the information about trusted radio access systems 10-1, 10-2 should preferably be provable data, e.g., the public verification key P_A1, P_A2 of the first and second radio access system 10-1, 10-2, respectively, which are manifested by their trust relation. C_CN,AN1 and C_CN,AN2. would then contain P_A1 and P_A2, respectively.

As shown in Fig. 9, the received security related information C_CN,AN1 and C_CN;AN2 is forwarded by the radio access systems 10-1, 10-2, e.g., roaming partners with a pre-established business agreement on offering access services to the subscribers of the.core network 10. According to Fig. 9 C_CN,AN1 may contain information about the radio access system 10-1, while C_CN,AN2 may contain information about the radio access system 10-2. This illustrates, e.g., a case where competing radio access systems are not interested in broadcasting advertisement information of other trusted networks.

As shown in Fig. 9, the advertisement information from the core network 10 may now be processed by the radio access systems 10-1, 10-2 before broadcast thereof. Heretofore, a number of alternatives exist:
- The radio access system broadcasts a beacon containing information including information such as time, location, and C_CN,AN1, C_CN,AN2, all data being digitally signed by the private key S_A1 and S_A2 of the related radio access system. As noted above, C_CN,AN1, C_CN,AN2 may contain P_A1, P_A2, in which case it is redundant to send it separately.
- The radio access system broadcasts a beacon containing optional information as described previously including information such as time, location, etc. signed with its private key S_A1, S_A2, accompanied separately by C_CN,AN1, C_CN,AN2.

Irrespective of the alternatives explained above, the user terminal 20 can verify information about every radio access system 10-1, 10-2 by processing the broadcast beacon(s). By verifying the signature of the core network 10 using the public key P_C of the core network 10, the user terminal can have confidence in the signed information such as the public key P_A1, P_A2 of the trusted radio access system 10-1, 10-2 and other information as described previously. In particular, relevance in terms of time and location or information expiry can be used to prove relevance of received information

Further, in view of the acquired knowledge the user terminal can in turn, using the obtained public key P_A1, P_A2 of the trusted radio access system 10-1, 10-2 verify that the signature of the beacon was indeed made by the trusted radio access system 10-1, 10-2 and gain confidence in the signed information from the radio access system 10-1, 10-2.

Still further, the verification of digital signatures with public keys thus serves, both, the purpose of authenticating signing parties as well as integrity protection of signed information.

Also, the present invention accounts also for the need to optionally encrypted at least some information during an advertisement phase. Using trust relationship between a core network 10 and the user terminal 20, further between radio access systems 10-1, 10-2 on the user terminal 20, or between the radio access systems 10-1, 10-2 and the core network 10, e.g., as manifested by sharing symmetric cryptographic keys, some information can be encrypted during delivery.

E.g., the core network 10 can encrypt information about services and prices in the secure advertisement to the user terminal 20, to avoid that the radio access system 10-1, 10-2 or any other party gains access to this sensitive information. The radio access system 10-1, 10-2 can provide similar information to the user terminal 20 without revealing it to other parties. The core network 10 and the radio access system 10-1, 10-2 can secretly exchange information about tariffs, either offline or in the advertisement information.

As shown in Fig. 9, as all this information is broadcast and therefore available to the user terminal 20 without the user terminal 20 sending anything, the privacy of the user terminal is maintained. In other words, the user terminal does not need to interact to obtain substantiated information about roaming partners. The "freshness" in terms of time and location avoids luring the user terminal 20 to act on obsolete advertisement information and reveal itself.

Further, given the well substantiated information, the user terminal 20 can executed an enlightened decision on which radio access system 10-1, 10-2 to respond to and what service, performance, price etc. to expect. Also the user terminal 20 may have signed commitments from service providers which it can use to compare with received service, performance, price etc. as a basis for complaint and repudiation.

Still further, the security on the basis of a continued interaction between the user terminal and the radio access system 10-1, 10-2 after processing of the advertisement can rely on cryptographic keys, in particular when the public key P_A1, P_A2 of the radio access system 10-1, 10-2 is used by the user terminal to verify that the subsequent communication with the radio access system 10-1, 10-2 in question is indeed with the radio access system 10-1, 10-2.

In view of the detailed explanations given above the following important improvements of the present invention over existing un-secured advertisement schemes may be observed:
Even without trusted parties such as home operators, the cryptographic approach can support trust built up between parties. Here, the beacon signal may contain a "cryptographic commitment" to provide certain services for certain costs, such that services can be securely logged and a broken commitment repudiated.

Further, with respect to hierarchical beacon signals referred to above, a way to limit complexity is to sign only some of the beacon signals or some parts of some beacon signals. Unprotected beacon signals are less expensive, e.g,, "stop and listen", and signed beacon signals show trustworthiness.

Further, hierarchical beacon signals can provide different levels of information details about communication networks sending out in different beacon signals and the user terminal may select the desired level of information. Also, if symmetric keys are used for integrity protection, different degrees of security can be used, e.g., by providing truncated message authentication codes instead of complete message authentication codes. Further, different length values for message authentication codes can be provided in different beacon signals.

Further, advertisement information elements can be encrypted, in addition to certification because they are related to sensitive information, e.g., network load, resource usage, which may be useful for network selection, but which an operator only reveals to a selected set of service subscribers. Also, only a closed user group is capable of seeing the network as it has keys for decoding related beacon signals, so-called hidden networks. This may also enable privacy protection of the end user of the user terminal.

Besides the extensions for hierarchical beacons outlined above, a further topic being related to the security protection as shown in Fig. 9 is geographic security.

Fig. 10 shows an example of a replay attack initiated by a rogue radio access system on the secure advertisement scheme according to the present invention.

As shown in Fig. 10, the signed beacon contains the information and signature of the radio access system 10 and the advertisement from the core network 10, C_CN,P_A1. One may assume that this information is copied and replayed by a rogue radio access system. The rogue radio access system is therefore in a position to inform a user terminal 32 that the broadcasting radio access system is the radio access system 10.

However, with the first message exchange between the rogue radio access system and the user terminal the fraudulence will be apparent. The reason is that the rogue radio access system does not have access to the private key S_A1 of the correct radio acces system 10 and therefore a verification of the signature of the rogue radio access system at the user terminal 32 will fail.

Hence the security properties are all fulfilled except that the privacy of the user terminal 32 seems to have been violated. However, given that time and location information was signed by the radio access system 10 and that the user terminal 32 checked these parameters, the correct radio access system 10 is in the neighbourhood, and that the user terminal 32 was anyway prepared to reveal itself in this area at this time, the replay attack is difficult to avoid, but easy to detect for location of the malicious sender.

Also, a further option to handle a replay attack would be to certify beacon signals/advertisement information for a specific geographic area, preferably in addition to time validity. A signed beacon signal/advertisement information including geographical coordinates received outside the specified geographic area would then be invalid. Therefore, the rogue access network could not replay beacon signals/advertisement information outside the geographic area.

Further, within the geographic area it would be likely that the originating access network 10 can hear the replayed advertisement and therefore detect itself the rogue access network. Generally, geographic areas may be described in any appropriate form, e.g., by coordinate regions such as GPS coordinates, or by ratio cell IDs of communication networks being identified again by related identifiers.

Further to the above, advertisement information may be sent from multiple cells and/or access networks in a way that only specific user terminals will receive combined information and can act on this information. The selective reception at specific user terminals may be achieved, e. g., by beam forming, directional antennas, etc. Using appropriate transmission technologies, only users at a specific location will be able to receive advertisement information. There has been described a method of operating a radio access system operated in a communication network, wherein the communication network cooperates with at least one further radio access system for advertisement of the at least one further radio access system in the communication network, comprising the steps receiving a secure advertisement from a control unit for the at least one further radio access system, and broadcasting advertisement information in relation to the secure advertisement in the communication network.

Preferably, the method comprises a step of executing relay functionality for establishment of a trust relationship between a terminal receiving the advertisement information and the at least one further radio access system.

Preferably, the method comprises a step of establishing a trust relationship between the terminal receiving the advertisement information and the radio access system, wherein the trust relationship is established on the basis of the secure advertisement received from the further radio access system.

Preferably, the method comprises a step of generating advertisement information which is executed according to at least one approach selected from a group comprising appending information comprised in the secure advertisement to local advertisement information broadcast for advertisement of the communication network, generating information allowing direct receipt

of further advertisement information from the at least one further radio access system, generating information reflecting availability of the at least one further radio access system, and/or generating advertisement information in a hierarchical group of advertisement information comprising advertisement information of different categories.

Preferably, the step of generating advertisement information is executed for grouping advertisement information into different categories according to their time relevance, priority, and/or amount of information.

Preferably, the step of generating advertisement information is executed for splitting advertisement information into a plurality of advertisement information sub-elements before broadcast thereof. Preferably, the step of generating advertisement information is executed for adding security protection to at least part of the generated advertisement information.

Preferably, the step of generating advertisement information is executed for adding security protection to at least part of the generated advertisement information for a geographic area.

Preferably, the step of broadcasting advertisement information uses different repetition frequencies for the different categories. Preferably, the step of broadcasting advertisement information is executed to broadcast advertisement information sub-elements sequentially.

Preferably, the step of broadcasting advertisement information is executed to broadcast advertisement information according to a predetermined broadcasting schedule or upon receipt of a broadcast request from at least one terminal.

Preferably, the method comprises a step of storing a communication overlap area with respect to the at least one further radio access system where the communication network and the at least one further radio access system are operated in parallel and that the step of broadcasting advertisement information is executed to broadcast the advertisement information with respect to the at least one further radio access system only in the corresponding communication overlap area.

Preferably, the method comprises a step of storing at least one terminal identification in relation to at least one further radio access system and that the step of broadcasting advertisement information is executed to selectively forward advertisement information for the at least one further radio access system to the at least one terminal being registered in relation to the at least one further radio access system.

Preferably, the method comprises a step of negotiating terms of advertisement with the at least one further radio access system before advertisement thereof in the communication network.

Also, there has been described a computer program product directly loadable into the internal memory of a radio access system, comprising software code portions for performing the steps of the inventive method when the product is run on a processor of the radio access system.

While above different aspects of the present invention like delivery of advertisement information, set up of hierarchical beacons and at least partial security protection of beacon signals have been described in combination, it should be noted that either aspect of the present invention should be considered as independent invention on its own. It is also possible that at least one of the radio access systems is replaced by a fixed access system, i. g., DSL or Ethernet.

## Claims

1. Radio access system operated in a first communication network and cooperating with at least one further radio access system operated in a different second communication network, to advertise the at least one further radio access system in the first communication network, comprising:
- a receiving unit (22) adapted to receive a security protected advertisement from a control unit (16) for the at least one further radio access system; and
- a broadcasting unit (24) adapted to broadcast advertisement information in relation to the security protected advertisement in the communication network; wherein
- the advertisement information is broadcast via a beacon.

2. Radio access system according to claim 1, ***characterized in that*** the radio access system is adapted to execute relay functionality for establishment of an authenticated relationship between a terminal (20) receiving the advertisement information and the at least one further radio access system (12).

3. Radio access system according to claim 1 or 2, ***characterized in that*** an authentication and authorization unit (28) is adapted to establish an authenticated relationship between the terminal (20) receiving the advertisement information and the radio access system (12), wherein the authenticated relationship is established on the basis of the security protected advertisement received from the further radio access system (12).

4. Radio access system according to one of the claims 1 to 3, ***characterized in that*** it comprises an advertisement information generation unit (30) adapted to generate advertisement information according to at least one approach selected from a group comprising:
- append information comprised in the secure advertisement to local advertisement information broadcast by the broadcasting unit (24) for advertisement of the communication network;
- generate information allowing direct receipt of further advertisement information from the at least one further radio access system;
- generate information reflecting availability of the at least one further radio access system; and/or
- generate advertisement information in a hierarchical group of advertisement information comprising advertisement information of different categories.

5. Radio access system according to claim 4, ***characterized in that*** the advertisement information generation unit (30) is adapted to group advertisement information into different categories according to their time relevance, priority, and/or amount of information.

6. Radio access system according to claim 4 or 5, ***characterized in that*** the advertisement information generation unit (30) is adapted to split advertisement information into a plurality of advertisement information sub-elements before broadcast thereof.

7. Radio access system according to one of the claims 4 to 6, ***characterized in that*** the advertisement information generation unit (30) is adapted to security protect at least part of the generated advertisement information.

8. Radio access system according to claim 7, ***characterized in that*** the advertisement information generation unit (30) is adapted to security protect at least part of the generated advertisement information for a geographic area.

9. Radio access system according to claim 4 or 5, ***characterized in that*** the broadcasting unit (24) is adapted to broadcast advertisement information of the different categories at different repetition frequencies.

10. Radio access system according to one of the claims 1 to 9, ***characterized in that*** the broadcasting unit (24) is adapted to broadcast advertisement information sub-elements sequentially.

11. Radio access system according to one of the claims 1 to 10, ***characterized in that*** the broadcasting unit (24) is adapted to broadcast advertisement information according to a pre-determined broadcasting schedule or upon receipt of a broadcast request from at least one terminal.

12. Radio access system according to one of the claims 1 to 11, ***characterized in that*** it comprises a communication overlap area storage unit (32) adapted to store a communication overlap area with respect to the at least one further radio access system where the radio access system and the at least one further radio access system are operated in parallel and that the broadcasting unit (24) is adapted to broadcast the advertisement information with respect to the at least one further radio access system only in the corresponding communication overlap area.

13. Radio access system according to one of the claims 1 to 12, ***characterized in that*** it comprises a terminal registration storage unit (34) adapted to store at least one terminal identification in relation to at least one further radio access system and that the broadcasting unit (24) is adapted to selectively forward advertisement information for the at least one further radio access system to the at least one terminal being registered in the terminal registration storage unit (34) in relation to the at least one further radio access system.

14. Radio access system according to one of the claims 1 to 13, ***characterized in that*** it comprises a negotiation unit (26) adapted to negotiate terms of advertisement with the at least one further radio access system before advertisement thereof through the radio access system.

15. Radio access node operated in a first communication network and cooperating with at least one further radio access system operated in a different second communication network, to advertise the at least one further radio access system in the first communication network, comprising:
- a receiving unit (22) adapted to receive a security protected advertisement from a control unit (16) for the at least one further radio access system; and
- a broadcasting unit (24) adapted to broadcast advertisement information in relation to the secure advertisement in the communication network; wherein
- the advertisement information is broadcast via a beacon.

16. Control unit (16) for controlling a radio access system (12) operated in a first communication network and cooperating with at least one further radio access system operated in a different second communication network, to advertise the at least one further radio access system in the first communication network, comprising:
- a sending unit adapted to send a security protected advertisement to a further control unit for the further radio access system (10) for broadcast of advertisement information in relation to the security protected advertisement via the further radio access system (10); wherein
- the advertisement information is broadcast via a beacon.

17. User terminal (20) having multi-radio access capability, comprising:
- receiving means adapted to receive broadcasted advertisement information from a radio access system operated in a first communication network, wherein the first communication network cooperates with at least one further radio access system operated in a different second communication network and the advertisement information relates to a security protected advertisement of the at least one further radio access system in the first communication network; and
- decision means adapted to decide whether to access the at least one further radio access system based on the advertisement information; wherein
- the advertisement information is broadcast via a beacon.

18. Method of operating a radio access system operated in a first communication network, wherein the first communication network cooperates with at least one further radio access system operated in a different second communication network, for advertisement of the at least one further radio access system in the first communication network, comprising the steps:
- receiving (S10) a security protected advertisement from a control unit (16) for the at least one further radio access system; and
- broadcasting (S12) advertisement information in relation to the security protected advertisement in the first communication network; wherein
- the advertisement information is broadcast via a beacon.

## Patentansprüche

1. Funkzugangssystem, welches in einem ersten Kommunikationsnetz betrieben wird, und mit mindestens einem weiteren Funkzugangssystem kooperiert, welches in einem anderen zweiten Kommunikationsnetz betrieben wird, zum Bekanntmachen des mindestens einen weiteren Funkzugangssystems in dem ersten Kommunikationsnetz, umfassend:
- eine Empfangseinheit (22), die eingerichtet ist zum Empfangen einer sicherheitsgeschützten Bekanntmachung von einer Steuereinheit (16) für das mindestens eine weitere Funkzugangssystem; und
- eine Rundsendeeinheit (24), die eingerichtet ist zum Rundsenden von Bekanritmachungsinformation in Bezug auf die sicherheitsgeschützte Bekanntmachung in dem Kommunikationsnetz; wobei
- die Bekanntmachungsinformation über einen Beacon rundgesendet wird.

2. Funkzugangssystem nach Anspruch 1, **dadurch gekennzeichnet, dass** das Funkzugangssystem eingerichtet ist zum Ausführen von Weiterleitungsfunktionalität zum Aufbau einer authentifizierten Beziehung zwischen einem Endgerät (20), das die Bekanntmachungsinformation empfängt, und dem mindestens einen weiteren Funkzugangssystem (12).

3. Funkzugangssystem nach Anspruch 1 oder 2, **dadurch gekennzeichnet, dass** eine Authentifizierungs- und Autorisierungseinheit (28) eingerichtet ist zum Aufbauen einer authentifizierten Beziehung zwischen dem Endgerät (20), das die Bekanntmachungsinformation empfängt, und dem Funkzugangssystem (12), wobei die authentifizierte Beziehung aufgebaut wird basierend auf der sicherheitsgeschützten Bekanntmachung, die von dem weiteren Funkzugangssystem (12) empfangen wird.

4. Funkzugangssystem nach einem der Ansprüche 1 bis 3, **dadurch gekennzeichnet, dass** es eine Bekanntmachungsinformationserzeugungseinheit (30) umfasst, die eingerichtet ist zum Erzeugen von Bekanntmachungsinformation entsprechend mindestens einem Ansatz, ausgewählt aus einer Gruppe, umfassend:
- Anhängen von Information, umfasst in der sicheren Bekanntmachung an lokale Bekanntmachungsinformation, rundgesendet durch die Rundsendeeinheit (24) zum Bekanntmachen des Kommunikationsnetzes;
- Erzeugen von Information, die einen direkten Empfang von weiterer Bekanntmachungsinformation von dem mindestens einen weiteren Funkzugangssystem erlaubt;
- Erzeugen von Information, welche die Verfügbarkeit von dem mindestens einen weiteren Funkzugangssystem reflektiert; und/oder
- Erzeugen von Bekanntmachungsinformation in einer hierarchischen Gruppe von Bekanntmachungsinformation, umfassend Bekanntmachungsinformation von verschiedenen Kategorien.

5. Funkzugangssystem nach Anspruch 4, **dadurch gekennzeichnet, dass** die Bekanntmachungsinformationserzeugungseinheit (30) eingerichtet ist zum Gruppieren von Bekanntmachungsinformation in verschiedene Kategorien entsprechend deren Zeitrelevanz, Priorität, und/oder Menge von Information.

6. Funkzugangssystem nach Anspruch 4 oder 5, **dadurch gekennzeichnet, dass** die Bekanntmachungsinformationserzeugungseinheit (30) eingerichtet ist zum Unterteilen von Bekanntmachungsinformation in eine Vielzahl von Bekanntmachungsinformationssubelementen vor deren Rundsenden.

7. Funkzugangssystem nach einem der Ansprüche 4 bis 6, **dadurch gekennzeichnet, dass** die Bekanntmachungsinformationserzeugungseinheit (30) eingerichtet ist zum Sicherheitsschützen von zumindest einem Teil der erzeugten Bekanntmachungsinformation.

8. Funkzugangssystem nach Anspruch 7, **dadurch gekennzeichnet, dass** die Bekanntmachungsinformationserzeugungseinheit (30) eingerichtet ist zum Sicherheitsschützen von zumindest einem Teil der erzeugten Bekanntmachungsinformation für einen geographischen Bereich.

9. Funkzugangssystem nach Anspruch 4 oder 5, **dadurch gekennzeichnet, dass** die Rundsendeeinheit (24) eingerichtet ist zum Rundsenden von Bekanntmachungsinformation der verschiedenen Kategorien bei verschiedenen Wiederholungsfrequenzen.

10. Funkzugangssystem nach einem der Ansprüche 1 bis 9, **dadurch gekennzeichnet, dass** die Rundsendeeinheit (24) eingerichtet ist zum sequentiellen Rundsenden von Bekanntmachungsinformationssubelementen.

11. Funkzugangssystem nach einem der Ansprüche 1 bis 10, **dadurch gekennzeichnet, dass** die Rundsendeeinheit (24) eingerichtet ist zum Rundsenden von Bekanntmachungsinformation entsprechend einem vorbestimmten Rundsendeplan oder bei Empfang einer Rundsendeanfrage von mindestens einem Endgerät.

12. Funkzugangssystem nach einem der Ansprüche 1 bis 11, **dadurch gekennzeichnet, dass** es eine Kommunikationsüberlappbereich-Speichereinheit (32) umfasst, die eingerichtet ist zum Speichern eines Kommunikationsüberlappbereichs mit Bezug auf das mindestens eine weitere Funkzugangssystem, in welchem das Funkzugangssystem und das mindestens eine weitere Funkzugangssystem parallel betrieben werden und dadurch, dass die Rundsendeeinheit (24) eingerichtet ist zum Rundsenden der Bekanntmachungsinformation mit Bezug auf das mindestens eine weitere Funkzugangssystem nur in dem entsprechenden Kommunikationsüberlappbereich.

13. Funkzugangssystem nach mindestens einem der Ansprüche 1 bis 12, **dadurch gekennzeichnet, dass** es eine Endgerätregistrierungsspeichereinheit (34) umfasst, die eingerichtet ist zum Speichern mindestens einer Endgerätidentifikation in Bezug auf mindestens ein weiteres Funkzugangssystem und dadurch, dass die Rundsendeeinheit (24) eingerichtet ist zum selektiven Weiterleiten von Bekanntmachungsinformation für das mindestens eine weitere Funkzugangssystem an das mindestens eine Endgerät, welches in der Endgerätregistrierungsspeichereinheit (34) in Bezug auf das mindestens eine weitere Funkzugangssystem registriert ist.

14. Funkzugangssystem nach mindestens einem der Ansprüche 1 bis 13, **dadurch gekennzeichnet, dass** es eine Verhandlungseinheit (26) umfasst, die eingerichtet ist zum Verhandeln von Bedingungen der Bekanntmachung mit dem mindestens einen weiteren Funkzugangssystem vor der Bekanntmachung davon mittels des Funkzugangssystems.

15. Funkzugangsknoten, welcher in einem ersten Kommunikationsnetz betrieben wird, und mit mindestens einem weiteren Funkzugangssystem kooperiert, welches in einem anderen zweiten Kommunikationsnetz betrieben wird, zum Bekanntmachen des mindestens einen weiteren Funkzugangssystems in dem ersten Kommunikationsnetz, umfassend:
- eine Empfangseinheit (22), die eingerichtet ist zum Empfangen einer sicherheitsgeschützten Bekanntmachung von einer Steuereinheit (16) für das mindestens eine weitere Funkzugangssystem; und
- eine Rundsendeeinheit (24), die eingerichtet ist zum Rundsenden von Bekanntmachungsinformation in Bezug auf die sichere Bekanntmachung in dem Kommunikationsnetz; wobei
- die Bekanntmachungsinformation über einen Beacon rundgesendet wird.

16. Steuereinheit (16) zum Steuern eines Funkzugangssystems (12), betrieben in einem ersten Kommunikationsnetz, und kooperierend mit mindestens einem weiteren Funkzugangssystem, betrieben in einem anderen zweiten Kommunikationsnetz, zum Bekanntmachen des mindestens einen weiteren Funkzugangssystems in dem ersten Kommunikationsnetz, umfassend:
- eine Sendeeinheit, die eingerichtet ist zum Senden einer sicherheitsgeschützten Bekanntmachung an eine weitere Steuereinheit für das weitere Funkzugangssystem (10) zum Rundsenden von Bekanntmachungsinformation in Bezug auf die sicherheitsgeschützte Bekanntmachung über das weitere Funkzugangssystem (10); wobei
- die Bekanntmachungsinformation über einen Beacon rundgesendet wird.

17. Benutzerendgerät (20) mit Multi-Funk-Zugangsfähigkeit, umfassend:
- Empfangsmittel, das eingerichtet ist zum Empfangen von rundgesendeter Bekanntmachungsinformation von einem Funkzugangssystem, betrieben in einem ersten Kommunikationsnetz, wobei das erste Kommunikationsnetz mit mindestens einem weiteren Funkzugangssystem kooperiert, betrieben in einem anderen zweiten Kommunikationsnetz, und die Bekanntmachungsinformation eine sicherheitsgeschützte Bekanntmachung des mindestens einen weiteren Funkzugangssystems in dem ersten Kommunikationsnetz betrifft; und
- Entscheidungsmittel, das eingerichtet ist zum Entscheiden ob auf das mindestens eine weitere Funkzugangssystem zugegriffen werden soll, basierend auf der Bekanntmachungsinformation; wobei
- die Bekanntmachungsinformation über einen Beacon rundgesendet wird.

18. Verfahren zum Betreiben eines Funkzugangssystems, betrieben in einem ersten Kommunikationsnetz, wobei das erste Kommunikationsnetz mit mindestens einem weiteren Funkzugangssystem kooperiert, betrieben in einem anderen zweiten Kommunikationsnetz, zum Bekanntmachen des mindestens einen weiteren Funkzugangssystems in dem ersten Kommunikationsnetz, umfassend die Schritte:
- Empfangen (S10) einer sicherheitsgeschützten Bekanntmachung von einer Steuereinheit (16) für das mindestens eine weitere Funkzugangssystem; und
- Rundsenden (S12) von Bekanntmachungsinformation in Bezug auf die sicherheitsgeschützte Bekanntmachung in dem ersten Kommunikationsnetz; wobei
- die Bekanntmachungsinformation über einen Beacon rundgesendet wird.

## Revendications

1. Système d'accès radio exploité dans un premier réseau de communication et coopérant avec au moins un autre système d'accès radio exploité dans un second réseau de communication différent, pour annoncer l'au moins un autre système d'accès radio dans le premier réseau de communication, comprenant :
- une unité de réception (22) apte à recevoir une annonce protégée en matière de sécurité en provenance d'une unité de commande (16) pour l'au moins un autre système d'accès radio ; et
- une unité de diffusion (24) apte à diffuser des informations d'annonce en relation avec l'annonce protégée en matière de sécurité dans le réseau de communication ;
- les informations d'annonce étant diffusées via une balise.

2. Système d'accès radio selon la revendication 1, le système d'accès radio étant **caractérisé en ce qu'**il est apte à exécuter une fonctionnalité de relais pour l'établissement d'une relation authentifiée entre un terminal (20) recevant les informations d'annonce et l'au moins un autre système d'accès radio (12).

3. Système d'accès radio selon la revendication 1 ou 2, **caractérisé en ce qu'**une unité d'authentification et d'autorisation (28) est apte à établir une relation authentifiée entre le terminal (20) recevant les informations d'annonce et le système d'accès radio (12), dans lequel la relation authentifiée est établie sur la base de l'annonce protégée en matière de sécurité reçue en provenance de l'autre système d'accès radio (12).

4. Système d'accès radio selon l'une des revendications 1 à 3, **caractérisé en ce qu'**il comprend une unité de génération d'informations d'annonce (30) apte à générer des informations d'annonce selon au moins une approche sélectionnée dans un groupe consistant à :
- ajouter des informations contenues dans l'annonce sécurisée à des informations d'annonce locales diffusées par l'unité de diffusion (24) pour l'annonce du réseau de communication ;
- générer des informations permettant la réception directe d'autres informations d'annonce en provenance de l'au moins un autre système d'accès radio ;
- générer des informations représentant la disponibilité de l'au moins un autre système d'accès radio ; et/ou
- générer des informations d'annonce dans un groupe hiérarchique d'informations d'annonce comprenant des informations d'annonce de différentes catégories.

5. Système d'accès radio selon la revendication 4, **caractérisé en ce que** l'unité de génération d'informations d'annonce (30) est apte à regrouper des informations d'annonce dans différentes catégories en fonction de leur pertinence temporelle, de leur priorité et/ou de leur quantité d'informations.

6. Système d'accès radio selon la revendication 4 ou 5, **caractérisé en ce que** l'unité de génération d'informations d'annonce (30) est apte à diviser des informations d'annonce en une pluralité de sous-éléments d'informations d'annonce avant diffusion de celles-ci.

7. Système d'accès radio selon l'une des revendications 4 à 6, **caractérisé en ce que** l'unité de génération d'informations d'annonce (30) est apte à protéger en matière de sécurité au moins une partie des informations d'annonce générées.

8. Système d'accès radio selon la revendication 7, **caractérisé en ce que** l'unité de génération d'informations d'annonce (30) est apte à protéger en matière de sécurité au moins une partie de informations d'annonce générées pour une zone géographique.

9. Système d'accès radio selon la revendication 4 ou 5, **caractérisé en ce que** l'unité de diffusion (24) est apte à diffuser des informations d'annonce de différentes catégories à des fréquences de répétition différentes.

10. Système d'accès radio selon l'une des revendications 1 à 9, **caractérisé en ce que** l'unité de diffusion (24) est apte à diffuser séquentiellement des sous-éléments d'informations d'annonce.

11. Système d'accès radio selon l'une des revendications 1 à 10, **caractérisé en ce que** l'unité de diffusion (24) est apte à diffuser des informations d'annonce conformément à un programme de diffusion prédéterminé ou lors de la réception d'une demande de diffusion en provenance d'au moins un terminal.

12. Système d'accès radio selon l'une des revendications 1 à 11, **caractérisé en ce qu'**il comprend une unité de stockage de zone de communication à chevauchement (32) apte à stocker une zone de chevauchement des communications par rapport à l'au moins un autre système d'accès radio où le système d'accès radio et l'au moins un autre système d'accès radio sont exploités en parallèle, et **en ce que** l'unité de diffusion (24) est apte à ne diffuser les informations d'annonce par rapport à l'au moins un autre système d'accès radio que dans la zone correspondante de chevauchement des communications.

13. Système d'accès radio selon l'une des revendications 1 à 12, **caractérisé en ce qu'**il comprend une unité de stockage d'enregistrement de terminal (34) apte à stocker au moins une identification de terminal en relation avec au moins un autre système d'accès radio, et **en ce que** l'unité de diffusion (24) est apte à réacheminer sélectivement des informations d'annonce pour l'au moins un autre système d'accès radio vers l'au moins un terminal qui est enregistré dans l'unité de stockage d'enregistrement de terminal (34) en relation avec l'au moins un autre système d'accès radio.

14. Système d'accès radio selon l'une des revendications 1 à 13, **caractérisé en ce qu'**il comprend une unité de négociation (26) apte à négocier des conditions d'annonce avec l'au moins un autre système d'accès radio avant l'annonce de celles-ci par l'intermédiaire du système d'accès radio.

15. Noeud d'accès radio exploité dans un premier réseau de communication et coopérant avec au moins un autre système d'accès radio exploité dans un second réseau de communication différent, pour annoncer l'au moins un autre système d'accès radio dans le premier réseau de communication, comprenant :
- une unité de réception (22) apte à recevoir une annonce protégée en matière de sécurité en provenance d'une unité de commande (16) pour l'au moins un autre système d'accès radio ; et
- une unité de diffusion (24) apte à diffuser des informations d'annonce en relation avec l'annonce sécurisée dans le réseau de communication ;
- les informations d'annonce étant diffusées via une balise.

16. Unité de commande (16) destinée à commander un système d'accès radio (12) exploité dans un premier réseau de communication et coopérant avec au moins un autre système d'accès radio exploité dans un second réseau de communication différent, pour annoncer l'au moins un autre système d'accès radio dans le premier réseau de communication, comprenant :
- une unité d'envoi apte à envoyer une annonce protégée en matière de sécurité à une autre unité de commande pour l'autre système d'accès radio (10) pour la diffusion d'informations d'annonce en relation avec l'annonce protégée en matière de sécurité via l'autre système d'accès radio (10) ;
- les informations d'annonce étant diffusées via une balise.

17. Terminal d'utilisateur (20) ayant une capacité d'accès radio multiple, comprenant :
- des moyens de réception aptes à recevoir des informations d'annonce diffusées en provenance d'un système d'accès radio exploité dans un premier réseau de communication, le premier réseau de communication coopérant avec au moins un autre système d'accès radio exploité dans un second réseau de communication différent et les informations d'annonce se rapportant à une annonce protégée en matière de sécurité de l'au moins un autre système d'accès radio dans le premier réseau de communication ; et
- des moyens de décision aptes à décider s'il est possible d'accéder à l'au moins un autre système d'accès radio sur la base des informations d'annonce ;
- les informations d'annonce étant diffusées via une balise.

18. Procédé d'exploitation d'un système d'accès radio exploité dans un premier réseau de communication, dans lequel le premier réseau de communication coopère avec au moins un autre système d'accès radio exploité dans un second réseau de communication différent, pour l'annonce de l'au moins un autre système d'accès radio dans le premier réseau de communication, comprenant les étapes consistant à :
- recevoir (S10) une annonce protégée en matière de sécurité en provenance d'une unité de commande (16) pour l'au moins un autre système d'accès radio ; et
- diffuser (S12) des informations d'annonce en relation avec l'annonce protégée en matière de sécurité dans le premier réseau de communication ;
- les informations d'annonce étant diffusées via une balise.
